# FASCICULE DE BREVET EUROPEEN

(11) **EP 2 132 679 B1**
(45) Date de publication et mention de la délivrance du brevet: **31.08.2016**
(21) Numéro de dépôt: 07872376.4
(22) Date de dépôt: 14.12.2007
(51) Int. Cl.: B41M 5/24, B41M 5/26, G06K 1/12, G06K 19/14, G06K 19/18, B23K 26/03, B23K 26/082, B23K 26/08

(54) **PROCEDE ET DISPOSITIF DE MARQUAGE D'OBJETS ET MATERIAUX**
VERFAHREN UND VORRICHTUNG ZUM MARKIEREN VON OBJEKTEN UND MATERIALIEN
METHOD AND DEVICE FOR MARKING OBJECTS AND MATERIALS

(30) Priorité: 14.12.2006 FR 0610894
(43) Date de publication de la demande: 16.12.2009
(73) Titulaire: Advanced Track & Trace, 92504 Rueil-Malmaison (FR)
(72) Inventeur: MASSICOT, Jean-Pierre, F-92504 Rueil Malmaison Cedex (FR); FOUCOU, Alain, F-92504 Rueil Malmaison (FR); SAGAN, Zbigniew, F-92504 Rueil Malmaison (FR); SODER, Hervé, 42000 Saint Etienne (FR)
(74) Mandataire: Cornuejols, Georges
(86) Numéro de dépôt international: PCT/FR2007/002086
(87) Numéro de publication internationale: WO 2008/093006

(56) Documents cités:
- WO-A-02/04223
- WO-A-03/058544
- FR-A- 2 755 902
- FR-A- 2 800 896
- US-A- 4 758 703
- US-A1- 2002 153 620

## Description

La présente invention concerne un procédé et un dispositif de marquage d'objets et de matériaux. Elle concerne, en particulier, le domaine de la lutte contre les contrefaçons et les importations parallèles.

On connaît de nombreuses techniques de marquages visibles de matériaux destinés à être incorporés dans des emballages de produits, par exemple des montres, des contenants de produits, par exemple des parfums, ou des produits. Cependant, du fait qu'elles sont visibles, ces marques sont retirées par les personnes malveillantes qui souhaitent effectuer de l'importation parallèle de ces objets.

On connaît aussi des techniques de marquage avec de l'encre invisible, que l'on peut lire avec des systèmes optiques mettant en oeuvre des longueurs d'ondes en dehors du spectre visible. Cependant, ces encres sont sensibles à la chaleur ou aux rayonnements et il est donc facile de les dégrader pour que les marques formées disparaissent.

La demande de brevet américain numéro US 4758703 divulgue un dispositif et un procédé pour coder des objets avec un code visible au microscope Un faisceau laser est passé à travers un masque pour imposer un motif représentatif d'un code au laser. L'intensité du faisceau lumineux est suffisante pour laisser une maque visible au microscope et insuffisante pour laisser une marque visible à l'oeil nu.

La demande de brevet américain numéro US 2002 0153620 divulgue le marquage d'un semi-conducteur avec des informations d'orientation et d'identification au moyen d'un laser. Le marquage peut être codé au moyen d'un code barre en deux dimensions.

La demande de brevet français numéro FR 2800896 divulgue un procédé de marquage et d'authentification d'un objet comportant l'association à l'objet de deux informations différentes liées entre elles par une correspondance dans lequel une des deux informations est imperceptible par un observateur et matérialisée par des moyens interagissant avec la structure de l'objet. Lors de l'authentification on procède à la lecture des deux informations et à la vérification de leur correspondance entre elles.

La présente invention vise à remédier à ces inconvénients.

A cet effet, la présente invention vise, selon un premier aspect, un procédé de marquage de matériau, qui comporte :
- une étape de génération d'un code,
- une étape de sélection aléatoire d'au moins une zone dudit matériau et
- une étape de marquage par un tir laser en surface ou à coeur de chaque dite zone du matériau pour y représenter ledit code d'une manière non perceptible à l'oeil nu.

Ainsi, l'information représentée est codée, la zone de marquage varie et le code marqué est invisible et n'est pas dégradé par la chaleur ou un quelconque rayonnement. On peut donc identifier un produit d'importation parallèle et, inversement, il est très fastidieux de le falsifier.

Selon des caractéristiques particulières, l'étape de sélection aléatoire d'au moins une zone de matériau est effectuée pour chaque pièce de matériau à marquer.

Grâce à ces dispositions, deux matériaux marqués d'un même lot ne possèdent pas le code invisible dans la même position, ce qui augmente la difficulté à les falsifier.

Selon des caractéristiques particulières, au cours de l'étape de génération d'un code, on génère un code à barres en deux dimensions et au cours de l'étape de marquage, on représente ledit code à barres en deux dimensions.

Grâce à ces dispositions, on peut coder beaucoup d'information dans le code invisible.

Selon des caractéristiques particulières, ledit matériau constitue une pièce en métal, matières plastiques ou céramique.

Grâce à ces dispositions, le matériau peut être constitutif d'un moule et toutes les pièces moulées avec ce moule posséderont une meilleure robustesse à la falsification que des pièces moulées avec un moule non marqué.

Selon des caractéristiques particulières, au cours de l'étape de marquage, on effectue une gravure du matériau d'une profondeur inférieure à cinq micromètres.

Selon des caractéristiques particulières, au cours de l'étape de marquage, on effectue, pour réaliser une marque formée de points, un tir laser d'une durée inférieure à dix picosecondes par point de la marque.

Selon des caractéristiques particulières, au cours de l'étape de marquage, la plus grande dimension de chaque point est inférieure à 50 micromètres.

Grâce à chacune de ces dispositions, la marque est petite, rapide à réaliser et n'altère pas le matériau en profondeur.

Selon des caractéristiques particulières, le procédé tel que succinctement exposé ci-dessus comporte, en outre, une étape de marquage dudit matériau pour y représenter une marque visible à l'oeil nu.

Grâce à ces dispositions, on peut combiner les avantages d'une marque visible, qui permet sa lecture rapide, et ceux du code invisible, difficile à repérer et à falsifier.

Selon des caractéristiques particulières, au cours de l'étape de sélection aléatoire d'au moins zone dudit matériau, on sélectionne aléatoirement au moins une partie d'une zone de marquage d'une marque visible à l'oeil nu.

Selon des caractéristiques particulières, ladite marque visible comporte une information représentative de la position d'au moins une zone où se trouve représenté le code non perceptible à l'oeil nu.

Grâce à ces dispositions, ceux qui disposent des moyens de lecture de la marque visible peuvent retrouver rapidement la position du code invisible et vérifier l'authenticité et la provenance du matériau en fonction de ce code invisible.

Selon des caractéristiques particulières, au cours de l'étape de sélection aléatoire d'au moins une zone dudit matériau, on sélectionne aléatoirement au moins une partie d'une zone imprimée.

Grâce à ces dispositions, lorsque l'on essaye de falsifier ou détruire le code invisible, on endommage la zone imprimée et, en conséquence, ce qu'elle signifie, par exemple le logo, la marque ou les caractéristiques du produit incorporant le matériau.

Selon des caractéristiques particulières, le procédé tel que succinctement exposé ci-dessus comporte, en outre, une étape de marquage par un tir laser en surface ou à coeur d'une zone de position prédéterminée pour y représenter ledit code d'une manière non perceptible à l'oeil nu.

Grâce à ces dispositions, au moins l'un des codes invisibles est dans une position aléatoire et un autre code invisible est dans une position connue, le second pouvant être lu rapidement et le premier servant de sauvegarde, au cas où le premier aurait été détruit.

Selon des caractéristiques particulières, au cours de ladite étape de marquage par tir laser, on met en oeuvre une seule impulsion laser et un modulateur optique matriciel sur lequel on représente ledit code.

Selon des caractéristiques particulières, au cours de ladite étape de marquage par tir laser, on met en oeuvre un système de déplacement à miroir galvanométrique dont la configuration dépend de la zone sélectionnée aléatoirement.

Grâce à chacune de ces dispositions, le marquage laser est rapide.

La présente invention vise, selon un deuxième aspect, un dispositif de marquage de matériau, qui comporte :
- un moyen de génération d'un code,
- un moyen de sélection aléatoire d'au moins une zone dudit matériau et
- un moyen de marquage par un tir laser en surface ou à coeur de chaque dite zone du matériau pour y représenter ledit code d'une manière non perceptible à l'oeil nu.

Les avantages, buts et caractéristiques particulières de ce dispositif étant similaires à ceux du procédé tel que succinctement exposé ci-dessus, ils ne sont pas recopiés ici.

D'autres avantages, buts et caractéristiques de la présente invention ressortiront de la description qui va suivre, faite, dans un but explicatif et nullement limitatif en regard des dessins annexés, dans lesquels :
- la figure 1 représente, schématiquement, un premier mode de réalisation particulier du dispositif objet de la présente invention,
- la figure 2 représente, sous forme d'un logigramme, des étapes d'implémentation d'un mode de réalisation particulier du procédé objet de la présente invention,
- la figure 3 représente, schématiquement, un deuxième mode de réalisation particulier du dispositif objet de la présente invention et
- la figure 4 représente, schématiquement, un troisième mode de réalisation particulier du dispositif objet de la présente invention.

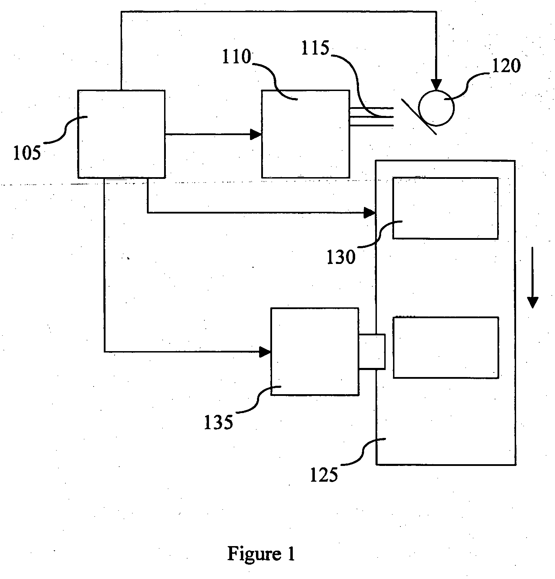

On observe, en figure 1, un système informatique 105, un générateur de rayon laser 110 muni de fibres optiques 115, des miroirs galvanométriques 120, un convoyeur 125 de pièces de matériau 130 et une imprimante à jet d'encre 135.

Le générateur de rayon laser est adapté, sous la commande du système informatique 105, à effectuer des tirs lasers en surface ou à coeur du matériau pour y représenter tout symbole ou tout code fourni par le système informatique 105, d'une manière non perceptible à l'oeil nu.

Par exemple, dans le cas du marquage de pièces en métal, en matières plastiques u en céramique, par exemple dans le cas d'un moule, le générateur de rayon laser 110 effectue préférentiellement une gravure du matériau d'une profondeur inférieure à cinq micromètres pour réaliser une marque formée de points, avec un tir laser d'une durée inférieure à dix picosecondes par point de la marque, chaque point ayant une plus grande dimension inférieure à 50 micromètres.

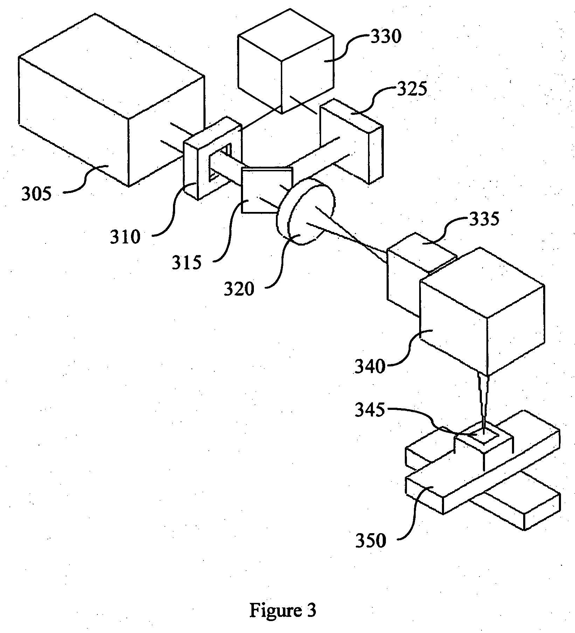

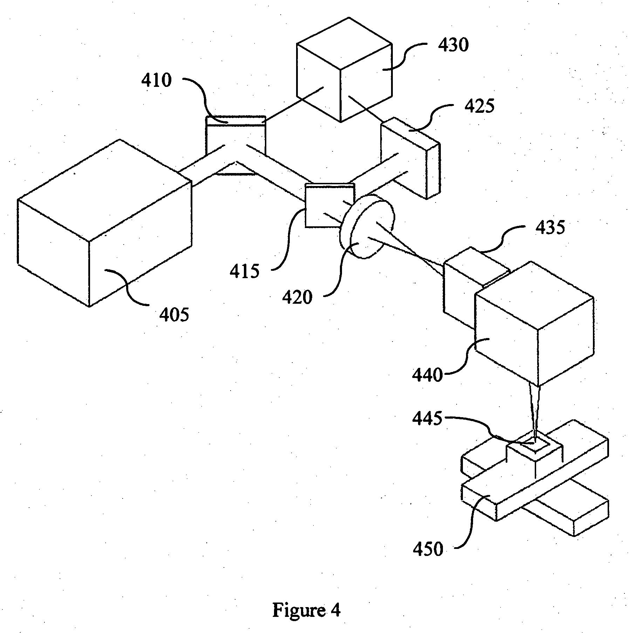

Dans des modes de réalisation, on met en oeuvre, pour former chaque code invisible, une seule impulsion laser et un modulateur optique matriciel, ou valve optique matricielle, fonctionnant par réflexion (voir figure 4) ou par transmission (voir figure 3), par exemple à cristaux liquides, sur lequel on représente ledit code. Le modulateur ou valve joue alors le rôle d'un masque reconfigurable entre deux tirs pour représenter successivement les différents codes.

Le système informatique 105 est de type connu et dispose de logiciels de générations de codes, de logiciel de tirage aléatoire et de logiciels de commande du générateur de rayon laser, de commande des positions des miroirs galvanométriques, de commande de l'imprimante à jet d'encre 135 et de commande du convoyeur 125.

Le logiciel de tirage aléatoire génère des couples nombres aléatoires dans des limites prédéterminées, ces couples de nombres aléatoires correspondant à des coordonnées sur une pièce de matériau 130. Préférentiellement, ce logiciel effectue un tirage d'un couple de nombres aléatoires pour chaque marque à graver avec le laser sur chaque pièce de produit.

Dans des modes de réalisation particuliers, le logiciel de tirage aléatoire génère les couples de nombres aléatoires dans un ensemble de couples correspondant à des zones prédéterminées, par exemple des zones de présence de logos, de marques, de description ou de texte ou dans une zone d'impression par l'imprimante à jet d'encre.

Le logiciel de génération de codes utilise des données relatives à la date, au lieu de marquage, au type et modèle de pièce et aux titulaires de droits de propriété intellectuelle concernant la pièce, par exemple, pour générer, avec une clé secrète, deux codes chiffrés, l'un étant destiné à être marqué sur le matériau par marquage laser et l'autre à être marqué sur le matériau par impression à jet d'encre.

Préférentiellement, ces codes prennent la forme de codes d'authentification anticopie à barres en deux dimensions, ou datamatrix.

Préférentiellement, au moins le code destiné à être marqué sur le matériau par impression à jet d'encre dépend de chaque couple de nombres aléatoires correspondant à la pièce de matériau à marquer.

Les logiciels de commande du générateur de rayon laser et de commande des positions des miroirs galvanométriques sont adaptés à effectuer le marquage de la pièce de matériau, avec le code destiné à être marqué par marquage laser, dans chaque position définie par un couple de nombres aléatoires fourni par le logiciel de tirage aléatoire.

Dans des modes de réalisation particuliers, les logiciels de commande du générateur de rayon laser et de commande des positions des miroirs galvanométriques sont aussi adaptés à effectuer le marquage de la pièce de matériau, avec le code destiné à être marqué par marquage laser, dans une position prédéterminée.

Le logiciel de commande de l'imprimante à jet d'encre 135 provoque l'impression, sur une pièce de matériau, du code destiné à être imprimé correspondant à cette pièce, étant à noter que si l'imprimante à jet d'encre 135 se trouve décalée par rapport au générateur 110 et, en conséquence, ne peut imprimer, simultanément au marquage laser, la même pièce que le générateur 110, une mémoire tampon conserve le code à imprimer jusqu'à ce que la pièce se trouve en regard de l'imprimante à jet d'encre 135.

Le logiciel de commande du convoyeur 125 met en déplacement le convoyeur entre deux périodes de marquage d'une pièce et d'impression de la même pièce ou d'une autre pièce.

Ainsi, le dispositif de marquage de matériau objet de la présente invention comporte :
- un moyen de génération d'un code,
- un moyen de sélection aléatoire d'au moins une zone dudit matériau et
- un moyen de marquage par un tir laser en surface ou à coeur de chaque dite zone du matériau pour y représenter ledit code d'une manière non perceptible à l'oeil nu.

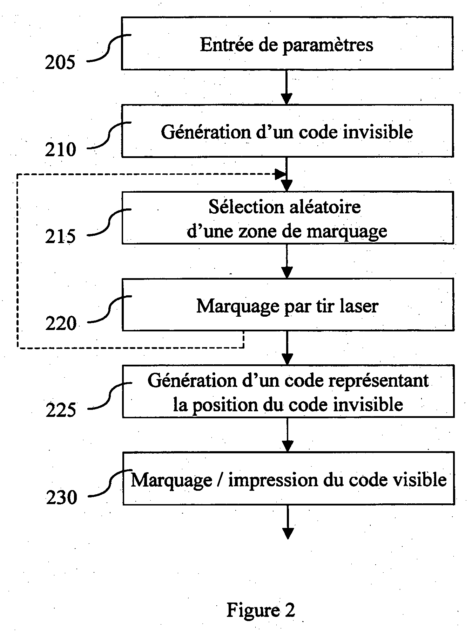

On observe, en figure 2, que, dans un mode de réalisation, le procédé objet de la présente invention comporte, d'abord, une étape 205 d'entrée de paramètres de code et de paramètres de positions possibles de codes invisibles sur une pièce de matériau. Selon les variantes, les positions possibles concernent toute la pièce de matériau ou seulement une partie de la pièce, par exemple les zones imprimées, notamment les logos et marques, ou une zone de marquage d'un code visible.

Au cours d'une étape 210, on effectue la génération d'un code destiné à être marqué, par marquage laser, de manière invisible. Préférentiellement, on génère un code à barres en deux dimensions, pour coder beaucoup d'information dans le code invisible.

Au cours d'une étape 215, on effectue la sélection aléatoire d'au moins une zone dudit matériau, dans les zones possibles pour le marquage laser d'un code invisible. Préférentiellement, l'étape de sélection aléatoire 215 est effectuée pour chaque pièce de matériau à marquer afin que deux pièces de matériau d'un même lot ne possèdent pas le code invisible dans la même position, ce qui augmente la difficulté à les falsifier.

Au cours d'une étape 220, on effectue un marquage par un tir laser en surface ou à coeur de chaque zone du matériau sélectionnée, pour y représenter ledit code d'une manière non perceptible à l'oeil nu. On observe que l'information représentée est codée, la zone de marquage varie et le code marqué, invisible, n'est pas dégradé par la chaleur ou un quelconque rayonnement. La mise en oeuvre de la présente invention permet donc d'identifier un produit d'importation parallèle et, inversement, il est très fastidieux de le falsifier.

On observe que, particulièrement dans le cas où le matériau constitue une pièce en métal, matières plastiques ou céramique, par exemple un moule, afin que toutes les pièces moulées avec ce moule possèdent une meilleure robustesse à la falsification que des pièces moulées avec un moule non marqué, au cours de l'étape 220 de marquage, on effectue une gravure du matériau d'une profondeur inférieure à cinq micromètres avec un tir laser d'une durée inférieure à dix picosecondes par point du code invisible, la plus grande dimension de chaque point étant inférieure à 50 micromètres. Ainsi, la marque du code est petite, rapide à réaliser et n'altère pas le matériau en profondeur.

Dans d'autres cas, au cours de l'étape de marquage par tir laser 220, on met en oeuvre une seule impulsion laser et un modulateur optique matriciel sur lequel on représente ledit code.

Dans des modes de réalisation particuliers, au cours de l'étape de marquage par tir laser 220, on met en oeuvre un système de déplacement à miroir galvanométrique dont la configuration dépend de la zone sélectionnée aléatoirement au cours de l'étape 215.

On observe que les étapes 215 et 220 peuvent être réitérées plusieurs fois pour la même pièce de matériau et que, dans l'une des itérations, au moins, l'étape 215 peut être omise afin que la position du marquage du code invisible soit prédéterminée. Dans ce dernier cas, au moins l'un des marquages du code invisible est dans une position aléatoire et un autre marquage du code invisible est dans une position connue, le second pouvant être lu rapidement et le premier servant de sauvegarde, au cas où le premier aurait été détruit.

Au cours d'une étape 225, on génère un code représentatif du contenu du code invisible et de sa position sur la pièce de matériau, ledit code étant destiné à être marqué de manière visible sur la pièce de matériau.

Au cours d'une étape 230, on effectue le marquage de la pièce de matériau pour y représenter une marque visible à l'oeil nu représentant le code généré au cours de l'étape 225. On combine ainsi les avantages d'une marque visible, qui permet sa lecture rapide, et ceux du code invisible, difficile à repérer et à falsifier. La lecture de la marque visible, lorsqu'elle est possible, permet de retrouver rapidement la position du code invisible et de vérifier rapidement l'authenticité et la provenance du matériau en fonction de ce code invisible. Lorsque la lecture de la marque visible n'est pas possible, par exemple parce que la marque visible a été volontairement altérée ou supprimée, la lecture de la marque invisible permet de vérifier l'authenticité de la pièce de matériau après recherche de cette marque invisible.

On observe, en figure 3, une source laser 305, une valve optique matricielle 310, une lame partiellement réfléchissante 315, une lentille de focalisation 320, un capteur photosensible 325, un calculateur 330, un scanner 335 et 340, un objet à marquer 345 et une table de positionnement 350.

La source laser 305 est de type connu. La valve optique matricielle 310 est de type transmissive. Elle est adaptée à filtrer les rayons lumineux issus de la source laser 305, en certains points de sa surface, pour former une image. La lame partiellement réfléchissante 315 est, par exemple, une lame de verre dont l'une des faces est traitée anti-reflet. Elle reflète, sur le capteur photosensible 325, une partie, par exemple cinq pour cent, de la lumière issue de la valve optique matricielle 310. Le calculateur 330 applique un asservissement de la transparence de la valve optique 310, en mettant en oeuvre une boucle de contre-réaction.

La lentille de focalisation 320 et chaque lentille optique (non représentés) incorporée dans le scanner 335 et 340 permettent de focaliser l'image obtenue en sortie de la valve optique matricielle 310 sur la surface de l'objet 345 afin de le marquer avec l'image formée par la valve optique matricielle 310, éventuellement retournée par les réflexions internes à l'intérieur du scanner 335 et 340 et par les lentilles se trouvant sur le trajet optique des rayons lumineux.

Le scanner 335 et 340 comporte deux miroirs galvanométriques (non représentés) permettant de positionner l'image sur l'objet à marquer 345, selon deux axes.

La table de positionnement 350 effectue, au moins, des mouvements selon un axe et, préférentiellement, selon six degrés de libertés (trois translations orthogonales et trois rotations d'axes orthogonaux) afin de positionner l'objet à marquer en regard de l'image formée à sa surface.

La valve optique matricielle 310, les miroirs du scanner 335 et 340 et les déplacement de la table de positionnement 350 sont commandés par un système informatique (non représenté), par exemple le système informatique 105 illustré en figure 1.

On observe, en figure 4, une source laser 405, une valve optique matricielle 410, une lame partiellement réfléchissante 415, une lentille de focalisation 420, un capteur photosensible 425, un calculateur 430, un scanner 435 et 440, un objet à marquer 445 et une table de positionnement 450.

La source laser 405 est de type connu. La valve optique matricielle 410 est de type réflexif. Elle est adaptée à filtrer les rayons lumineux issus de la source laser 405, en certains points de sa surface, pour former une image. La lame partiellement réfléchissante 415 est, par exemple, une lame de verre dont l'une des faces est traitée anti-reflet. Elle reflète, sur le capteur photosensible 425, une partie, par exemple cinq pour cent, de la lumière issue de la valve optique matricielle 410. Le calculateur 430 applique un asservissement de la transparence de la valve optique 410, en mettant en oeuvre une boucle de contre-réaction.

La lentille de focalisation 420 et chaque lentille optique (non représentés) incorporée dans le scanner 435 et 440 permettent de focaliser l'image obtenue en sortie de la valve optique matricielle 410 sur la surface de l'objet 445 afin de le marquer avec l'image formée par la valve optique matricielle 410, éventuellement retournée par les réflexions internes à l'intérieur du scanner 435 et 440 et par les lentilles se trouvant sur le trajet optique des rayons lumineux.

Le scanner 435 et 440 comporte deux miroirs galvanométriques (non représentés) permettant de positionner l'image sur l'objet à marquer 445, selon deux axes.

La table de positionnement 450 effectue, au moins, des mouvements selon un axe et, préférentiellement, selon six degrés de libertés (trois translations orthogonales et trois rotations d'axes orthogonaux) afin de positionner l'objet à marquer en regard de l'image formée à sa surface.

La valve optique matricielle 410, les miroirs du scanner 435 et 440 et les déplacements de la table de positionnement 450 sont commandés par un système informatique (non représenté), par exemple le système informatique 105 illustré en figure 1.

## Revendications

1. Procédé de marquage de matériau, **caractérisé en ce qu'**il comporte :
- une étape (210) de génération d'un code,
- une étape (215) de sélection aléatoire d'au moins une zone dudit matériau,
- une étape (220) de marquage par un tir laser en surface ou à coeur de chaque dite zone du matériau pour y représenter ledit code d'une manière non perceptible à l'oeil nu, et
- une étape (230) de marquage dudit matériau pour y représenter une marque visible à l'oeil nu comportant une information représentative de la position d'au moins une zone où se trouve représenté le code non perceptible à l'oeil nu.

2. Procédé selon la revendication 1, **caractérisé en ce que** l'étape (215) de sélection aléatoire d'au moins une zone de matériau est effectuée pour chaque pièce de matériau à marquer.

3. Procédé selon l'une quelconque des revendications 1 ou 2, **caractérisé en ce que**, au cours de l'étape (210) de génération d'un code, on génère un code à barres en deux dimensions et au cours de l'étape de marquage, on représente ledit code à barres en deux dimensions.

4. Procédé selon l'une quelconque des revendications 1 à 3, **caractérisé en ce que** ledit matériau constitue une pièce en métal, matières plastiques ou céramique.

5. Procédé selon l'une quelconque des revendications 1 à 4, **caractérisé en ce que**, au cours de l'étape (220) de marquage, on effectue une gravure du matériau d'une profondeur inférieure à cinq micromètres.

6. Procédé selon l'une quelconque des revendications 1 à 5, **caractérisé en ce que**, au cours de l'étape (220) de marquage, on effectue, pour réaliser une marque formée de points, un tir laser d'une durée inférieure à dix picosecondes par point de la marque.

7. Procédé selon la revendication 6, **caractérisé en ce que**, au cours de l'étape (220) de marquage, la plus grande dimension de chaque point est inférieure à 50 micromètres.

8. Procédé selon l'une des revendications 1 à 7, **caractérisé en ce que**, au cours de l'étape (215) de sélection aléatoire d'au moins zone dudit matériau, on sélectionne aléatoirement au moins une partie d'une zone de marquage d'une marque visible à l'oeil nu.

9. Procédé selon l'une quelconque des revendications 1 à 8, **caractérisé en ce que**, au cours de l'étape (215) de sélection aléatoire d'au moins une zone dudit matériau, on sélectionne aléatoirement au moins une partie d'une zone imprimée.

10. Procédé selon l'une quelconque des revendications 1 à 9, **caractérisé en ce qu'**il comporte, en outre, une étape (220) de marquage par un tir laser en surface ou à coeur d'une zone de position prédéterminée pour y représenter ledit code d'une manière non perceptible à l'oeil nu.

11. Procédé selon l'une quelconque des revendications 1 à 10, **caractérisé en ce que**, au cours de ladite étape (220) de marquage par tir laser, on met en oeuvre une seule impulsion laser et un modulateur optique matriciel sur lequel on représente ledit code.

12. Procédé selon l'une quelconque des revendications 1 à 11, **caractérisé en ce que**, au cours de ladite étape (220) de marquage par tir laser, on met en oeuvre un système de déplacement à miroir galvanométrique dont la configuration dépend de la zone sélectionnée aléatoirement.

13. Dispositif de marquage de matériau, **caractérisé en ce qu'**il comporte :
- un moyen (105) de génération d'un code,
- un moyen (105) de sélection aléatoire d'au moins une zone dudit matériau,
- un moyen de marquage par un tir laser en surface ou à coeur de chaque dite zone du matériau pour y représenter ledit code d'une manière non perceptible à l'oeil nu, et
- un moyen de marquage dudit matériau pour y représenter une marque visible à l'oeil nu comportant une information représentative de la position d'au moins une zone où se trouve représenté le code non perceptible à l'oeil nu.

## Patentansprüche

1. Verfahren zur Werkstoffkennzeichnung, **dadurch gekennzeichnet, dass** es Folgendes umfasst:
- einen Schritt (210) zum Erzeugen eines Codes,
- einen Schritt (215) zum zufälligen Auswählen zumindest einer Zone des besagten Werkstoffs,
- einen Schritt (220) zum Kennzeichnen durch einen Laserschuss an der Oberfläche oder im Kern einer jeden besagten Zone des Werkstoffs, um dort den besagten Code in einer Art und Weise darzustellen, die mit freiem Auge nicht wahrnehmbar ist, und
- einen Schritt (230) zum Kennzeichnen des besagten Werkstoffs, um dort ein Zeichen darzustellen, die mit freiem Auge sichtbar ist, eine Information umfassend, die repräsentativ für die Position von zumindest einer Zone ist, in der sich der sich der Code dargestellt befindet, der mit freiem Auge nicht wahrnehmbar ist.

2. Verfahren nach Anspruch 1, **dadurch gekennzeichnet, dass** der Schritt (215) zum zufälligen Auswählen zumindest einer Zone eines Werkstoffs für jedes Werkstoffteil erfolgt, das zu kennzeichnen ist.

3. Verfahren nach irgendeinem der Ansprüche 1 oder 2, **dadurch gekennzeichnet, dass** man im Laufe des Schrittes (210) zum Erzeugen eines Codes einen zweidimensionalen Strichcode erzeugt und man im Laufe des Kennzeichnungsschritts den besagten zweidimensionalen Strichcode darstellt.

4. Verfahren nach irgendeinem der Ansprüche 1 bis 3, **dadurch gekennzeichnet, dass** der besagte Werkstoff ein Teil aus Metall, Kunststoffmaterialien oder Keramik bildet.

5. Verfahren nach irgendeinem der Ansprüche 1 bis 4, **dadurch gekennzeichnet, dass** man im Laufe des Schrittes (220) zum Kennzeichnen eine Gravur des Werkstoffs mit einer Tiefe von weniger als fünf Mikrometern vornimmt.

6. Verfahren nach irgendeinem der Ansprüche 1 bis 5, **dadurch gekennzeichnet, dass** man im Laufe des Schrittes (220) zum Kennzeichnen zur Durchführung eines aus Punkten bestehenden Zeichens einen Laserschuss mit einer Dauer von weniger als zehn Pikosekunden je Punkt der Kennzeichnung ausführt.

7. Verfahren nach Anspruch 6, **dadurch gekennzeichnet, dass** im Laufe des Schrittes (220) zum Kennzeichnen die größte Abmessung eines jeden Punkts kleiner als 50 Mikrometer ist.

8. Verfahren nach einem der Ansprüche 1 bis 7, **dadurch gekennzeichnet, dass** man im Laufe des Schrittes (215) zum zufälligen Auswählen zumindest einer Zone des besagten Werkstoffs zufällig zumindest einen Abschnitt einer Zone zur Kennzeichnung mit zumindest einem Zeichen auswählt, das mit freiem Auge sichtbar ist.

9. Verfahren nach irgendeinem der Ansprüche 1 bis 8, **dadurch gekennzeichnet, dass** man im Laufe des Schrittes (215) zum zufälligen Auswählen zumindest einer Zone des besagten Werkstoffs zufällig zumindest einen Abschnitt einer bedruckten Zone auswählt.

10. Verfahren nach irgendeinem der Ansprüche 1 bis 9, **dadurch gekennzeichnet, dass** es darüber hinaus einen Schritt (220) zum Kennzeichnen durch einen Laserschuss an der Oberfläche oder im Kern einer Zone in einer vorbestimmten Position umfasst, um dort den besagten Code in einer Art und Weise darzustellen, die mit freiem Auge nicht wahrnehmbar ist.

11. Verfahren nach irgendeinem der Ansprüche 1 bis 10, **dadurch gekennzeichnet, dass** man im Laufe des besagten Schrittes (220) zum Kennzeichnen durch einen Laserschuss einen einzigen Laserimpuls und einen optischen Matrix-Modulator anwendet, auf dem man den besagten Code darstellt.

12. Verfahren nach irgendeinem der Ansprüche 1 bis 11, **dadurch gekennzeichnet, dass** man im Laufe des besagten Schrittes (220) zum Kennzeichnen durch einen Laserschuss ein Verschiebungssystem mit einem galvanometrischen Spiegel anwendet, dessen Konfiguration von der zufällig ausgewählten Zone abhängt.

13. Vorrichtung zur Werkstoffkennzeichnung, **dadurch gekennzeichnet, dass** sie Folgendes umfasst:
- ein Mittel (105) zum Erzeugen eines Codes,
- ein Mittel (105) zum zufälligen Auswählen zumindest einer Zone des besagten Werkstoffs,
- ein Mittel zum Kennzeichnen durch einen Laserschuss an der Oberfläche oder im Kern einer jeden besagten Zone des Werkstoffs, um dort den besagten Code in einer Art und Weise darzustellen, die mit freiem Auge nicht wahrnehmbar ist, und
- ein Mittel zum Kennzeichnen des besagten Werkstoffs, um dort ein Zeichen darzustellen, das mit freiem Auge sichtbar ist, eine Information umfassend, die repräsentativ für die Position der zumindest einen Zone ist, in der sich der Code dargestellt befindet, der mit freiem Auge nicht wahrnehmbar ist.

## Claims

1. Materials marking method, **characterized in that** it comprises:
- a step (210) of generating a code;
- a step (215) of randomly selecting at least one area of said material;
- a step (220) of marking by laser shot on the surface or in the center of each said area of the material to represent thereon said code in a way that cannot be detected by the naked eye; and
- a step (230) of marking said material in order to represent thereon a mark that is visible to the naked eye comprising an item of information representative of the position of at least one area where the code that cannot be detected by the naked eye is represented.

2. Method according to claim 1, **characterized in that** the step (215) of randomly selecting at least one area of material is performed for each item of material to be marked.

3. Method according to any one of claims 1 or 2, **characterized in that**, during the step (210) of generating a code, a two-dimensional barcode is generated and, during the marking step, said two-dimensional barcode is represented.

4. Method according to any one of claims 1 to 3, **characterized in that** said material constitutes an item made of metal, plastic or ceramic.

5. Method according to any one of claims 1 to 4, **characterized in that**, during the marking step (220), the material is engraved to a depth of less than five micrometers.

6. Method according to any one of claims 1 to 5, **characterized in that**, during the marking step (220), in order to realize a mark formed of dots, a laser shot is carried out with a duration of less than ten picoseconds for each dot of the mark.

7. Method according to claim 6, **characterized in that**, during the marking step (220), the largest dimension of each dot is less than 50 micrometers.

8. Method according to one of claims 1 to 7, **characterized in that**, during the step (215) of randomly selecting at least one area of said material, at least one portion of a marking area of a mark visible to the naked eye is selected randomly.

9. Method according to any one of claims 1 to 8, **characterized in that**, during the step (215) of randomly selecting at least one area of said material, at least one portion of a printed area is selected randomly.

10. Method according to any one of claims 1 to 9, **characterized in that** it also comprises a step (220) of marking by laser shot on the surface or in the center of an area of predefined position in order to represent thereon said code in a way that cannot be detected by the naked eye.

11. Method according to any one of claims 1 to 10, **characterized in that**, during said laser shot marking step (220), a single laser pulse and an array optical modulator, on which said code is represented, are utilized.

12. Method according to any one of claims 1 to 11, **characterized in that**, during said laser shot marking step (220), a movement system using a galvanometer mirror, whose configuration is dependent on the area randomly selected, is utilized.

13. Materials marking device, **characterized in that** it comprises:
- a means (105) for generating a code;
- a means (105) of randomly selecting at least one area of said material;
- a means for marking by laser shot on the surface or in the center of each said area of the material to represent thereon said code in a way that cannot be detected by the naked eye; and
- a means for marking said material in order to represent thereon a mark that is visible to the naked eye comprising an item of information representative of the position of at least one area where the code that cannot be detected by the naked eye is represented.
